# EUROPEAN PATENT APPLICATION

(11) **EP 0 589 707 A1**
(43) Date of publication of application: **30.03.1994**
(21) Application number: 93307573.1
(22) Date of filing: 24.09.1993
(51) Int. Cl.: C02F 1/78, C02F 1/76

(54) **Biocidal system for re-circulating cooling water**

(30) Priority: 25.09.1992 GB 9220254
(71) Applicant: HOUSEMAN LIMITED, Burnham, Slough SL1 7LS (GB)
(72) Inventor: Robinson, Jim Scott, Ottershaw, Surrey KT 16 0LU (GB); Christopher, Noel Stuart James, Poynton, Cheshire SK12 1HG (GB)
(74) Representative: Peet, Jillian Wendy

(57) **Abstract**

A process for the treatment of an aqueous cooling liquid comprising contacting at least a portion of the recirculating liquid with iodine and ozone. The process is directed to treatment of water cooling systems where the pH of the liquid is high, during at least part of the process being above pH 8.0.

In the process, iodine may be added in the form of an iodide salt to be oxidised in situ.

The invention is particularly useful for prevention of the growth of Legionella bacteria and for preventing development of biofilms.

## Description

This invention relates to a biocidal method for treating cooling water which is re-circulated. The cooling water system may be an open or closed system and the invention is particularly useful where the re-circulating water reaches high pH.

It is well known that halogens and many halogen containing compounds can be used as effective biocidal agents.

For example, WO 90/8558 describes halogen containing compounds which are sterilising agents or which react to release a sterilising agent, used in conjunction with the stabilising agent to suppress the chemical dissociation of the halogen containing compound and maintain the lifetime of the halogen. Among the examples of suitable halogen containing compounds are iodine chlorides or bromides. The production of halogen biocides in situ by oxidising a halide ion is described for water sterilising tablets in GB 1406540 where tablets are formed from oxidising agent, acid, iodide and iodate.

It is also well known that ozone is a useful biocidal agent, and that it is effective at lower concentrations than most conventional oxidising biocides. Its use is reported for example in US 4798669 which describes a water treatment system in which water is treated with ozone, is subsequently filtered and goes through a post-treatment step by further contact with ozone on the surface of the liquids. The method is described for drinking water treatment, the ozone being used for example to kill bacteria and viruses and to break down organic substances.

It is also known to use halides such as bromides or iodides with ozone in water in swimming pools in which not only does the ozone produce a biocidal effect, but also acts as an oxidant for the halide ions to form residual amounts of halogen based disinfectants.

For example, GB 674281 describes a method for treating swimming pools or other large bodies of water using bromine or iodine as a biocide. Ozone is used to oxidise halide ions to produce the halogens in situ in the pool water. The description explains that the use of ozone itself, although it has good sterilising properties, is insufficient alone due to its low solubility which prohibits the maintenance of a residual action for more than a short time after treatment.

The use of ozone and halide ions in swimming pools is also described in GB 1506970 which relates particularly to medical tub-baths and underwater massage baths. The method described comprises passing the bath water through a filtered assembly charged with bromine and/or bromide ions or iodine and/or iodide ions and charging the water with ozone-containing gas.

Such systems are also described for example in DE 2040030 and GB 2219790 and WO 90/13520. WO 90/13520 exemplifies systems in which bath water is treated with ozone, flocculating agent and bromide.

The pH of water which is used for swimming pools and for drinking water obviously must be approximately neutral. British Department of the Environment Guidelines give limits for the upper pH of swimming pool water of less than 8.2 for pool water treated with bromine and, for the more common treatment with chlorine the pH should be less than 7.8, but the aim is to maintain the pH below 7.6. Thus, commonly, the pH of swimming pool water should generally be below 7.8.

One other area where water disinfection is essential is in water cooling systems. The chemistry of cooling waters is quite different to that of swimming pool waters. Water loss from swimming pools is minimal. Although a small amount of water will evaporate, pools have a low surface to volume ratio. In contrast, cooling water systems are specifically designed to lose water by evaporation in order to cool the bulk of the liquid. As a consequence, the concentration of dissolved solids in the re-circulating water increases; it is becoming desirable to operate cooling systems at as high a "concentration factor" as possible without inducing precipitation of scaling salts.

In swimming pools, treatment to protect against biological contamination or to destroy any biological contamination is carried out because control of water-borne intestinal pathogens (Escherichia coli etc) and maintenance of bather comfort are paramount.

Biocidal control of water circulating in cooling systems is potentially more exacting than for example in medical baths and swimming pools. Open evaporative cooling water systems concentrate the water so that hardness, alkalinity and the level of dissolved solids in such systems tend to be significantly greater than in swimming pools where the water chemistry is much closer to that of the mains feed water. Also, the content of dissolved and suspended organic matter will be significantly greater in cooling systems than in swimming pools. Therefore, a biocide which is effective in a swimming pool may not be effective in the different cooling water environment of a cooling water system.

In addition, the relative complexity of the cooling apparatus which includes a large amount of heat transfer and evaporative surfaces and pipework enhance the problems of providing effective biocidal treatment because there are therefore various remote points where the flow rate is significantly lower than the main flow rate through the apparatus. These areas are particularly prone to the build-up of bacteria and eventually biofilm which can cause considerable interference with the cooling water system. Furthermore, there is an additional danger of the build-up of Legionella bacteria. Also, the biocides used must maintain their efficacy even over the greater temperature range inside the system.

The present invention is directed to treatment of cooling water systems and overcoming the associated difficulties with such treatment. In particular the treatment should inhibit the growth of microbial films which are particularly problematic on heat exchange and evaporative surfaces and to control the growth of the Legionnaires' disease bacterium.

Presently, biocidal treatments of water cooling systems may be either oxidizing biocides such as bromine or non-oxidizing systems such as quaternary ammonium compounds, glutaraldehyde, isothiazolinones, biguanides and chlorinated phenols. Oxidizing biocides are widely used and bromine is the most commonly employed after chlorine. The use of ozone with bromide is disclosed for cooling systems in GB 2219790 and the use of ozone chemistry generally and with bromide ions for disinfection in re-circulating cooling water systems is described in "Fundamental Aspects of Ozone Chemistry in Re-circulating Cooling Water Systems" by Rip G. Rice and J. Fred Wilkes, (paper number 205 from the NACE Annual Conference and Corrosion Show, 11 to 15 March 1991).

However, ozone reacts in aqueous systems in two ways, firstly by decomposition of ozone to form hydroxyl free radicals and secondly by oxidation of species in the aqueous liquid by molecular ozone.

Although the hydroxyl free radicals are strongly oxidizing their half life is so short that they do not produce effective disinfection and in order to produce adequate disinfection, sufficient molecular ozone must be provided to the aqueous liquid so that some level of dissolved disinfectant is maintained in contact with the bacteria or other micro-organisms in the liquid.

As the pH in the aqueous liquid increases, the tendency of the ozone to form hydroxyl radicals increases. Thus, Locher, 1986, "Hygieneproblem Umweltfreundlich Gelost" CCI, Die Zeitung issue #1 has proposed the incorporation of bromide ions into the system and this results in oxidation of the bromide ions to biocidally active bromine compounds which also play a disinfecting role.

It is known that when halides are oxidised in water, hypohalous acids form and these are also biocidally active species. However it is also known that as the pH of the solution increases, the hypohalous acids decompose to form hypohalides which have much reduced biocidal activity.

However, due to the increasing awareness of environmental factors and water usage, it is becoming more usual to re-circulate water for longer periods than was previously the practice. This results in considerable build-up of dissolved salts in the re-circulating water and an accompanying increase of the pH in the system. This is particularly a problem in hard water areas. Rice and Wilkes describe cooling water systems in which pH usually levels off within the general range of 8.5 to 9.3 although pH can reach even higher levels at some point during the recirculation.

Due to the factors described above, the biocidal performance of both ozone and bromine in this type of disinfection systems are adversely affected at such high pH.

In particular, the residual bromine disinfectant is less effective at high pH as the rate of dissociation to biocidially inactive hypobromite increases. At present, the industry uses two ways of overcoming this problem. The first is to use higher concentrations of bromine in the system to maintain the high levels of biocidal activity. Whilst this does produce effective biocidal activity, it has a significant disadvantage in that since the bromine is corrosive, as the concentration increases, so does the corrosive strength of the aqueous liquid in the cooling system and this is highly damaging to the apparatus. The alternative which is often used is to switch away from the preferred oxidising biocides to a non-oxidizing method of biocidal treatment. Thus, at present there is no satisfactory oxidising biocidal treatment for use in cooling water systems and which is effective at high pH.

The present invention overcomes these problems whilst alleviating the need for significantly increased concentrations of corrosive components and enabling continued use of an oxidising biocidal system.

The invention aims to provide a water disinfection treatment which can be used to give effective biocidal treatment throughout a water cooling system, even in remote points in the system where the flow rate is very low and which is operable up to the high pH which may be due to continuous re-circulation.

According to the present invention, there is provided a method of treating an aqueous liquid in a re-circulating cooling system comprising dosing at least a portion of the liquid for circulation with iodine and ozone, the pH of the liquid in at least part of the process being above 8.0.

In the high alkalinity water which results from continued recirculation, ozone is rapidly converted to hydroxyl radicals which are then scavenged by alkalinity anions such as carbonate or bicarbonate. Thus, the presence of a residual biocide becomes more important. Dosing iodine results in iodine (I₂), hypoiodous acid and hypoiodite being present in the aqueous liquid, the proportions depending on the water pH. Iodine and hypoiodous acid are biocidal; hypoiodite is not. The dissociation of hypoiodous acid occurs at a higher pH than for the bromine equivalent and so biocidal activity can be provided for example up to around pH 10 whilst keeping corrosion to a minimum.

It is particularly important that a good residual biocide is provided in the systems because ozonation of organic impurities in the water produces break-down products for example, simple organic acids and alcohols which can be used as a feed source by micro-organisms. The provision of residual biocidally active iodine compounds in the system overcomes this problem as it ensures prolonged protection against microbial development. The use of iodine in conjunction with ozone reduces the amount of ozone which is required in the water. This is additionally advantageous because ozone in water can be corrosive and a reduction of the concentration of ozone reduces the internal corrosion to the cooling water re-circulating apparatus.

Furthermore, in comparison to the previously known bromide systems, because the iodine compounds are less strongly oxidising , the process of the invention is therefore more suitable for waters with a high organic content for example a cooling water system in a bakery where the aqueous liquid may contain a large amount of yeast. This is because compared to bromine, iodine is less reactive with organic materials which contaminate such systems. Iodine will therefore persist for longer periods and provide extended microbial control.

An additional advantage is also found because when a halogen is added to water, the corresponding hypohalous acid is formed in an equilibrium reaction. Since the reaction is reversible as halogenated cooling water passes over the cooling tower packing a proportion of halogen is lost by volatilisation. Removal of the halogen drives the reverse reaction so that the biocidial moiety (HOX) is continually lost. Because iodine is less volatile than chlorine or bromine, less of it is lost as it passes over the tower.

One further advantage which arises through the use of the biocide of the present invention is that because iodine does not react with ammonia to form iodamines, unlike for example bromine, the biocidal activity is not diminished by the presence of ammonia.

This type of oxidising biocides is additionally advantageous because ozone and/or halogen can be dosed on a continuous basis whereas non-oxidizing biocides are generally added on a batch basis. Although bacteria require some time to replicate, it is preferred to use a biocidal system which can be easily adapted to continuous or substantially continuous methods of application as this prevents bacterial build-up so that quantities of slime be prevented from forming.

One additional consideration with respect to bacterial build-up is the efficiency of the heat exchange and evaporative processes in the cooling system.

Water used in these re-circulating cooling systems will usually contain some form of living micro-organisms which under the conditions in the systems concerned can multiply and cause a number of problems. Initially the microbes are introduced suspended in the water. These so-called planktonic micro-organisms are relatively easy to detect and monitor and also to kill using conventional biocides. Although they can cause problems, for instance if the micro-organisms are pathogenic, in general they do not significantly affect the overall efficiency of the system.

The planktonic micro-organisms can however become adherent to internal surfaces in the system when they are known as "sessile". Sessile bacteria can proliferate and some bacteria generate so called slime composed mainly of polysaccharide and form a biofilm upon the surface. These films have recently been recognised as contributing to inefficiencies in the systems for various reasons. For instance the films will reduce efficiency of conductive heat transfer through the heat transfer surfaces and, since they are viscoelastic, increase fluid frictional resistance at the surface dramatically. Furthermore some types of bacteria produce compounds which may be environmentally hazardous or may lead to corrosion of metal in the surface to which the film is attached. Sulphate reducing bacteria in particular can give rise to serious corrosion of metal surfaces. Of the environmentally hazardous bacteria, Legionella bacteria are known to occur widely in natural and man-made aqueous systems. L. pneumophila is the most common cause of legionellosis in man, and also appears to be the most common species in a man-made environment.

Bacteria in biofilms are in general found to be difficult to eliminate, partly because chemical biocides must penetrate the slime before they reach the target micro-organisms deep within the films. In the case of pathogens such as Legionella bacteria, the link between transient appearances of pathogenic planktonic bacteria and biofilms emphasises the particular importance of prevention of biofilm development. It is therefore especially important to be able to prevent bacterial build-up in any part of the system. The invention is also therefore directed to a method for preventing biofilm formation.

The present invention also includes a process for preventing growth of Legionella bacteria in a re-circulating cooling system comprising dosing at least a portion of the liquid for circulation with iodine and ozone, the pH of the liquid in at least part of the process being above 8.0.

The presence of planktonic general bacteria can be analysed by any of the known methods. The presence of planktonic Legionella bacteria can be analysed by the method described in "A Laboratory Manual for Legionella", edited by T.G. Harrison and A.G. Taylor, p. 31-44 or as described in the BSI Draft for Development 211. Analysis for sessile general and Legionella bacteria can be carried out in the same way after collection of the bacteria as described in EP-A-0327386.

The present invention also includes use of ozone and iodine as a biocide in re-circulating aqueous liquid in a cooling system in which the aqueous liquid reaches a pH of at least 8.0 for at least part of the circulation.

The processes and uses of the present invention are useful up to high pH, for example above pH 8.5 or pH 9, even above pH 9.3 or 9.6. Preferably the pH of the aqueous liquid in the cooling system will be no greater than 10.25 because above this level, the ozone dissociates very quickly to hydroxyl radicals. This is particularly a problem where carbonate or bicarbonate ions are present as these are very good hydroxyl free radical scavengers. The carbonate ion is a particularly strong free radical scavenger. The pKa of the bicarbonate/carbonate equilibrium is 10.25. Therefore as the pH of the solution approaches 10.25, the concentration of carbonate ion increases and when ozone is added to aqueous solutions containing such ions, the rate of decomposition of ozone to hydroxyl free radical can increase to such an extent that if the carbonate content of the aqueous liquid is high, the scavenging of these hydroxyl radicals can become so fast that the beneficial biocidal effects obtained by the use of the ozone are considerably reduced.

Thus, preferably the carbonate content (as bicarbonate or carbonate) does not exceed 200mg/l preferably it does not exceed 150mg/l, and especially when the carbonate/bicarbonate content exceeds 50mg/l, preferably the pH of the liquid is no greater than 10.25.

Cooling systems also generally require dosing with corrosion inhibitors. Apart from its well known microbial control properties, ozone can also inhibit corrosion, so its use in cooling systems is particularly advantageous. It is thought that this may be because ozone maintains a positive reduction-oxidation ("redox") potential in the water. The use of ozone and iodide in high pH systems can therefore provide microbial and corrosion control.

Despite the corrosion-inhibiting properties of ozone, traditional organic corrosion inhibitors may still be required in ozonated cooling waters. The present invention therefore provides an additional advantage in that because iodine is a less aggressive halogen than bromine or chlorine, loss of inhibitors through oxidation (a real problem in water treatment) will be significantly less using iodinethan using bromine or chlorine. The present invention is particularly beneficial because it provides microbial control in remote parts of cooling systems (which rapidly decomposing ozone might never reach), while at the same time not affecting the performance of the inhibitors in the re-circulating water.

The ozone may be supplied to the re-circulating water by any of the conventional means such as by using ultraviolet radiation or corona discharge. The amount of ozone which can be added to the aqueous liquid is dependent upon the concentration of ozone in the gas contacting the water. The concentration of ozone generated as a percentage of air is higher using corona discharge and so this is the preferred method as it enables the addition of a higher amount of ozone directly into the re-circulating water, if necessary.

Preferably the amount of ozone in the atmosphere which contacts the aqueous liquid is from .001% to 3%, preferably at least 0.1%. Depending upon the amount of ozone reactive species in the liquid, the concentration of the ozone generated in the gas for supply of ozone or the amount of contact of the re-circulating liquid with the ozone atmosphere produced by the ozone generator can be adapted. For example, a cooling system which has been operating for some time may already contain biofilms and large amounts of organic material and other bacteria. In such circumstances, a higher ozone dosage will be necessary until the organics already present in the circulating system are destroyed. In contrast, in a new cooling system, the amount of ozone required is only sufficient to prevent the growth of micro-organisms which will ensure that they are unable to attach to heat-exchange and evaporative surfaces and biofilm formation is prevented.

A higher ozone dosage can be achieved by either increasing the ozone content in the gas supplied to the liquid or by ozonating a larger proportion of the re-circulating liquid or by maintaining ozonation continuously.

Generally the ozone will be added to the aqueous liquid to achieve a concentration of from 0.01mg/l to 5mg/l, preferably at least 0.05mg/l and most preferably at least 0.1mg/l. Preferably ozone will be added to achieve a concentration of no greater than 2.0mg/l and most preferably no greater than 1.0 mg/l.

The ozone-containing air produced by the ozone generator is normally contacted with a portion of the re-circulating liquid. For example up to 25% or up to 15%, typically 1 to 5% of the recirculating liquid is separated from the body of the liquid and contacted with the ozone-containing air produced by the ozone generator. Even for well established cooling systems where there is a degree of organic build-up prior to use of the ozone and iodine, after the initial destruction of the organic species, recirculation of a portion of the re-circulating liquid through the ozone generator should be sufficient to provide the necessary biocidal concentration in the water.

In a cooling system, ozone may be dosed into the tower pond itself or via a sidestream off the main re-circulating flow. Ozone should not be dosed into the water just before it enters the tower, as most will be lost by volatilization as this water falls through the tower packing. The iodide is preferably dosed just as the cooled water leaves the tower pond and is pumped back into the system as illustrated in the diagram below.

Where the iodine is added in the form of an iodide and produced in situ by oxidation, the amount of ozone required will be slightly greater as ozone will also be required for oxidation of iodide ions.

The iodine may be added as iodine or may be formed in situ from any oxidisable form. Iodine is however difficult to handle and so when added as iodine it is preferably added in the form of an iodophor. Iodophors are substances which comprise iodine solubilised in a surface-active agent. The iodine retains its germicidal action but not the undesirable properties of iodine. Generally, the surface-active agent is non-ionic and the iodine is present as micellar aggregates. When the iodophor is placed in contact with the aqueous liquid, dispersion of the micelles occurs and up to 90% of the iodine is slowly liberated. The concentration of iodine required is again, dependent upon the degree of contamination of the aqueous liquid and upon the pH. Sufficient iodophor should be added to maintain an iodine residual in an amount from 1mg/l to 15mg/l, preferably at least 4mg/l, most preferably at least 8mg/l, preferably no greater than 10mg/l.

Preferably the iodine is formed in situ by the oxidation of iodide ions. Preferably the oxidation is by ozone preferably which is present in the aqueous liquid. Generally, iodide ions will be added as an alkali metal iodide, preferably sodium or potassium iodide. Formation of iodine in situ is advantageous because neither iodine in its natural solid state, nor hypoiodous acid which is an unstable compound, can readily be stored and then dosed into a cooling water system. Furthermore, metal halides are a much less costly source of iodine compared to iodophors. Generally the iodide will be added to the aqueous liquid in an amount of from 0.1mg/l to 25mg/l. Preferably at least 1mg/l and most preferably at least 2mg/l will be added. Preferably the addition of iodide will be in amounts no greater than 20mg/l.

The iodide in the liquid will be oxidised by ozone which also oxidises much of the organic material in the liquid. No residual ozone will remain but residual hypoiodous acid will remain in solution and provide more prolonged biocidal activity. This ensures that bacterial build-up cannot occur in the remote points of the apparatus. When the re-circulating liquid is re-circulated and contacted with further ozone, the iodine compounds (which have been reduced due to their action as biocide) are oxidised back to the active iodine compounds.

Algae which may be present are oxidised and lysing of the oxidised algae may be caused by circulation of water in the system and results in the production of various biopolymers which build-up in the liquid. These biopolymers may be natural flocculating polymers which are capable of producing a foam in the system. Thus, preferably the iodide is added in the form of an antifoam-containing iodide solution.

Both ozone and iodine will assist the elimination of microbial biofilms when dosed into cooling water systems. Because neither biocide possesses significant surface-active properties, the efficacy of ozone and iodine treatment against biofilms will be enhanced by the simultaneous addition of a biodispersing surface-active agent. Thus, preferably the iodine is added in the form of an iodide solution containing both an antifoam agent and a biodispersant.

The iodine or iodine forming compound and ozone may be added to the aqueous liquid in any order but preferably, especially where iodine is formed in situ, the iodide is dosed to an aqueous system in which ozone is already present. The ozone may be added continuously or substantially continuously.

Other optional additives in the water re-circulating system can be for example corrosion inhibitors, scale preventives and agents for controlling the deposition of suspended solids.

This invention is now discussed in more detail with reference to the accompanying example.

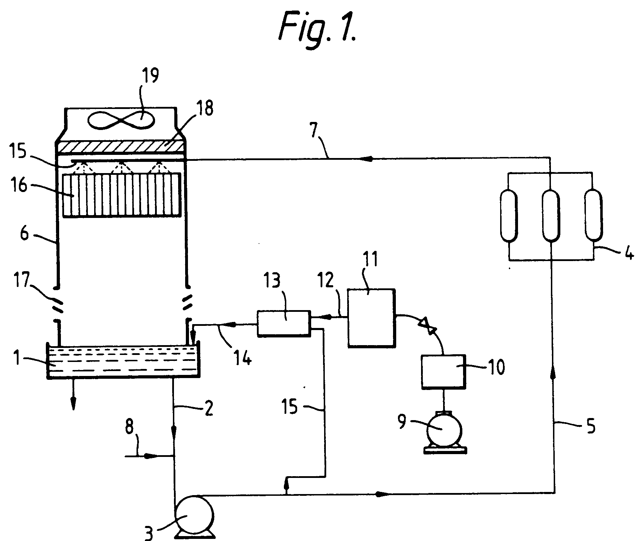

Figure 1 illustrates a schematic representation of an industrial re-circulating cooling system illustrating the preferred points of addition of the ozone and iodine source. In the representation, water from the tower pond 1 exits the tower along line 2. Circulation pump 3 pumps the water around the system to heat exchanger 4 along line 5. After leaving the heat exchanger 4, the return cooling water enters the top of cooling tower 6, via line 7. The source of iodine (in the form of iodine, iodophor or oxidizable iodide ions, generally in solution) is added into the cooling water, prior to the re-circulation pump at 8. Air compressor 9 forces air through the air drier 10 and into the ozone generator 11. Ozone produced in the ozone generator passes along line 12 into the contactor 13. A proportion of the cooling water from line 5 is diverted prior to passing through the heat exchanger, to travel instead along line 15 and into the contactor 13 to contact ozone and produce ozonized water, which passes along line 14 and into tower pond 1.

Alternatively, the ozone may be dosed into the tower pond itself. Preferably, the ozone is not dosed to the returned cooling water in line 7, prior to entering the top of cooling tower as most of the ozone will be lost as the water cascades down tower packing.

In the cooling process, return cooling water enters the cooling tower along line 7 and through spray bar 15. It passes down through packing 16, to fall to the bottom of the tower, to the cooling pond. Air enters the tower through vents 17 and flows upwardly through the tower and drift eliminator 18 to exit the tower. The air flow is controlled by fan 19.

## Claims

1. A method of treating an aqueous cooling liquid comprising dosing at least a portion of the liquid for circulation with iodine and ozone, the pH of the liquid during at least part of the process being above pH 8.0.

2. A method according to claim 1 in which the pH of the liquid is above pH 8.5 or even above 9.6, preferably no greater than pH 10.25.

3. A method according to claim 1 or claim 2 in which the iodine is added in the form of an iodide salt of an alkali metal, preferably in the form of sodium or potassium iodide, to be oxidised in situ.

4. A method according to claim 3 in which the iodide is added to the liquid in an amount of from 1mg/l to 25mg/l.

5. A method according to claim 1 or 2 in which the iodine is added in the form of an iodophor, preferably in an amount to maintain an iodine residual in an amount of from 1 to 10mg/l.

6. A method according to any preceding claim in which the amount of carbonate and/or bicarbonate in the liquid is no greater than 150 mg/l preferably no greater than 50 mg/l.

7. A method according to any preceding claim in which from 1 to 5% of the re-circulating water is separated prior to recycle, for ozonation.

8. A method according to any preceding claim in which the ozone is produced by corona discharge and dosed to the re-circulating water to result in an ozone concentration in the water of from 1 to 20mg/l by weight.

9. A method according to any preceding claim for prevention of biofilm formation.

10. Use of ozone and iodine as a biocide in re-circulating aqueous liquid in a cooling system in which the aqueous liquid reaches a pH of at least 8.0 for at least part of the circulation.

11. Use according to claim 10 in which the re-circulating liquid is at a pH of at least 8.5 preferably at least 9.0 during circulation, preferably no greater than 10.25.

12. Use of ozone and iodine as the biocide in re-circulating aqueous liquid in a cooling system in which the aqueous liquid reaches a pH of at least 8.0 for at least part of the circulation, for prevention of the growth of Legionella bacteria.
